# EUROPEAN PATENT APPLICATION

(11) **EP 4 151 065 A1**
(43) Date of publication of application: **22.03.2023**
(21) Application number: 22192073.9
(22) Date of filing: 25.08.2022
(51) Int. Cl.: A01B 79/00, A01D 41/127, A01B 69/04

(54) **AUTOMATIC TRAVEL METHOD, WORK VEHICLE AND AUTOMATIC TRAVEL SYSTEM**

(30) Priority: 08.09.2021 JP 2021146142
(71) Applicant: Yanmar Holdings Co., Ltd., Osaka-shi, Osaka (JP)
(72) Inventor: SUZUKI, Hidetaka, Okayama (JP); SHIMAMOTO, Hirokazu, Okayama (JP); MURAYAMA, Masaaki, Okayama (JP); YAMAGUCHI, Yuji, Okayama (JP); NISHII, Yasuto, Okayama (JP)
(74) Representative: Novagraaf International SA

(57) **Abstract**

A combine (1) includes a control device (30) and a mobile terminal (40). The mobile terminal (40) includes a control device (41), and when the control device (41) detects movement to one field where automatic travel is to be performed, the control device (41) functions as a parameter setting unit (51) that sets a field parameter corresponding to the one field. The control device (30) functions as a travel control unit (35) that executes automatic travel of the combine (1) on the basis of a work route set for the one field and the field parameter.

## Description

### TECHNICAL FIELD

The present invention relates to an automatic travel method, a work vehicle, and an automatic travel system for causing a work vehicle to automatic travel in a field.

### BACKGROUND ART

Conventionally, a work vehicle such as a combine that performs automatic travel in a field is configured to create a work route in a field on the basis of various parameters related to the field and the work vehicle, and perform automatic travel on the basis of the work route and the parameters.

For example, a travel creation support system disclosed in Patent Document 1 includes a display device having a first travel creation unit that creates a scheduled travel route for a work machine, and the first travel creation unit creates a scheduled travel route on the basis of setting parameters such as work width parameters, lap width parameters, headland parameters, and turning radius parameters.

### PRIOR ART DOCUMENT

### PATENT DOCUMENT

Patent Document 1: Japanese Patent Laid-open No. 2021-35381

### SUMMARY OF INVENTION

### TECHNICAL PROBLEM

A parameter related to a field varies for each field. In a conventional technology, each time a work vehicle moves to a field where automatic travel is to be performed, a worker needs to set a parameter corresponding to the field, which imposes a burden on the worker. Further, in a case where the work vehicle performs automatic travel in one field, and thereafter moves to the other field, a parameter corresponding to the one field is still set to the work vehicle. At this time, when automatic travel in the other field is performed with the parameter corresponding to the one field, there is a risk that automatic travel or work which is not suitable for the other field is performed.

An object of the present invention is to provide an automatic travel method, a work vehicle, and an automatic travel system capable of easily setting a parameter suitable for a field.

### SOLUTION TO PROBLEM

In order to solve the above problem, an automatic travel method of the present invention is an automatic travel method for causing a work vehicle to perform automatic travel in a field, the automatic travel method including: a setting step of setting a parameter corresponding to one field, when movement to the one field where automatic travel is to be performed is detected; and an automatic travel step of executing the automatic travel of the work vehicle on the basis of a work route set for the one field, and the parameter.

In order to solve the above problem, a work vehicle of the present invention is a work vehicle that performs automatic travel in a field, the work vehicle including: a parameter setting unit that sets a parameter which corresponds to one field and is stored in advance, when movement to the one field where automatic travel is to be performed is detected; and a travel control unit that executes automatic travel of the work vehicle on the basis of a work route set for the one field and the parameter.

In order to solve the above problem, an automatic travel system of the present invention is an automatic travel system that causes a work vehicle to perform automatic travel in a field, the automatic travel system including: a parameter setting unit that sets a parameter which corresponds to one field and is stored in advance, when movement to the one field where automatic travel is to be performed is detected; and a travel control unit that executes automatic travel of the work vehicle on the basis of a work route set for the one field and the parameter.

### ADVANTAGEOUS EFFECTS OF INVENTION

According to the present invention, there are provided an automatic travel method, a work vehicle, and an automatic travel system capable of easily setting a parameter suitable for a field.

### BRIEF DESCRIPTION OF DRAWINGS

FIG. 1 is a side view of a combine according to an embodiment of the present invention;
FIG. 2 is a block diagram of the combine according to the embodiment of the present invention;
FIG. 3 is a plan view illustrating an example of a work screen displayed on a mobile terminal of the combine according to the embodiment of the present invention;
FIG. 4 is a plan view illustrating an example of a travel information setting screen displayed on the mobile terminal of the combine according to the embodiment of the present invention; and
FIG. 5 is a flowchart illustrating an example of an operation example of setting a field parameter in the combine according to the embodiment of the present invention.

### DESCRIPTION OF EMBODIMENTS

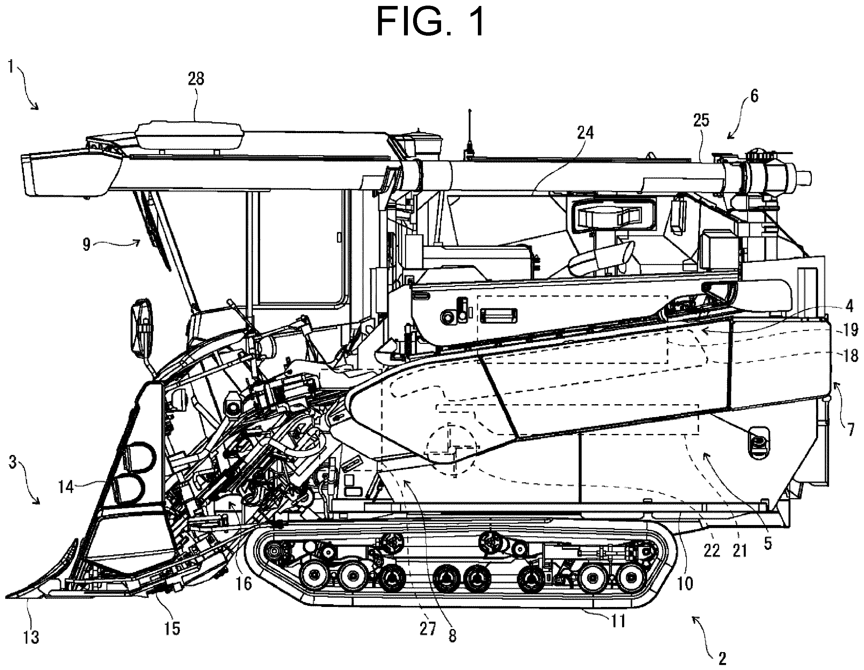

A combine 1 according to an embodiment of the present invention will be described with reference to FIG. 1 and other drawings. The combine 1 travels in a field as an object to be worked by automatic driving or manual operation, and performs work such as reaping for performing harvest work of crops from grain culms planted in the field. The combine 1 is, for example, configured to perform automatic operation in which steering is controlled by automatic operation while the traveling speed is controlled in response to manual operation, or unmanned operation in which the steering and the traveling speed are controlled by automatic driving, and can travel, turn, and work autonomously in a field.

While traveling on the route of straight rows, a predetermined number of which within the reaping possible row number is a reaping width, with respect to a plurality of rows of grain culms, the combine 1 performs reaping work for the straight rows. In the combine 1, a travel mode, either a manual travel mode or an automatic travel mode, is set. The combine 1 is configured to perform manual travel according to steering of a steering unit 9 by a worker, in a case where the manual travel mode is set.

On the other hand, the combine 1 is configured to perform automatic reaping travel for performing reaping while traveling automatically in accordance with a work route set in a field, in a case where the automatic travel mode is set. For example, the combine 1 performs the automatic reaping travel with a travel pattern such as reciprocating reaping in which the combine 1 reciprocates between a plurality of work routes in a region with an unreaped grain culm in the field (hereinafter referred to as an "unreaped region"), and a reaping while circulating in which reaping is repeated by shifting the circumference of the work route along an inner circumference of the unreaped region toward the center of the unreaped region.

Before the combine 1 performs the automatic reaping travel, the combine 1 performs outer circumference reaping travel, in which the combine 1 travels along the outer circumference of the field while reaping, so that a headland is formed in the field, and the inside of the headland is used as a work region for the automatic reaping travel.

The combine 1 stores harvested grains from the field while performing reaping travel, and when a predetermined storage amount of grains is stored, the combine 1 performs discharge work for discharging the stored grains to a collection part outside the field.

As illustrated in FIG. 1, the combine 1 includes a travel unit 2, a reaping unit 3, a threshing unit 4, a sorting unit 5, a reservoir unit 6, a discharged straw processing unit 7, a power unit 8, and a steering unit 9, and is composed of a so-called head-feeding type combine. The combine 1 travels by the travel unit 2, threshes grain culms reaped by the reaping unit 3 in the threshing unit 4, sorts grains in the sorting unit 5, and stores the sorted grains in the reservoir unit 6. The combine 1 processes a discharged straw obtained after the threshing by the discharged straw processing unit 7. The combine 1 drives the travel unit 2, the reaping unit 3, the threshing unit 4, the sorting unit 5, the reservoir unit 6, and the discharged straw processing unit 7 with power supplied by the power unit 8.

The travel unit 2 is provided below a main body frame 10, and includes a left-and-right pair of crawler type travel devices 11, and a transmission (not illustrated). The travel unit 2 causes the combine 1 to travel in the front-rear direction, or causes the combine 1 to turn in the left-right direction by rotating crawlers of the crawler type travel devices 11 with power (for example, rotational power) transmitted from an engine 27 of the power unit 8. The transmission transmits the power (rotational power) of the power unit 8 to the crawler type travel devices 11, and is capable of shifting the rotational power.

The reaping unit 3 is provided in front of the travel unit 2, and performs reaping work for the rows within the reaping possible row number. The reaping unit 3 includes a divider 13, a raising device 14, a cutting device 15, and a transport device 16. The divider 13 divides the grain culms in the field for each row, and guides, to the raising device 14, the grain culms for a predetermined number of rows within the reaping possible row number. The raising device 14 raises the grain culms guided by the divider 13. The cutting device 15 cuts the grain culms raised by the raising device 14.
The transport device 16 transports the grain culms cut by the cutting device 15 to the threshing unit 4.

The threshing unit 4 is provided behind the reaping unit 3. The threshing unit 4 includes a feed chain 18, and a threshing cylinder 19. The feed chain 18 transports the grain culms transported from the transport device 16 of the reaping unit 3 in order to thresh, and further transports the threshed grain culms, that is, discharged straw to the discharged straw processing unit 7. The threshing cylinder 19 threshes the grain culms transported by the feed chain 18.

The sorting unit 5 is provided below the threshing unit 4. The sorting unit 5 includes a swing sorting device 21, a blower sorting device 22, a grain transport device (not illustrated), and a waste straw discharge device (not illustrated). The swing sorting device 21 sifts the threshed grains that falls from the threshing unit 4 and sorts the threshed grains into grains, waste straw, and the like. The blower sorting device 22 further sorts the threshed grains sorted by the swing sorting device 21 into grains, waste straw, and the like by blowing air. The grain transport device transports the grains sorted by the swing sorting device 21 and the blower sorting device 22 to the reservoir unit 6. The waste straw discharge device discharges the waste straw and the like sorted by the swing sorting device 21 and the blower sorting device 22 to the outside of the combine.

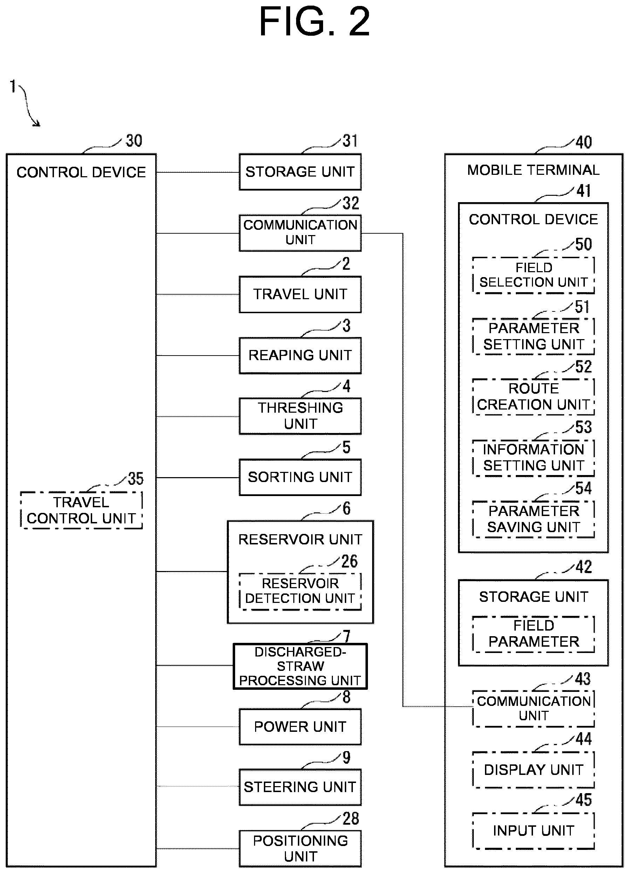

The reservoir unit 6 is provided on the right side of the threshing unit 4. The reservoir unit 6 includes a grain tank 24, and a discharge device 25. The grain tank 24 stores the grains transported from the sorting unit 5. In the reservoir unit 6, a reservoir capacity is set as data indicating a maximum amount in which the grain tank 24 is capable of storing grains. The discharge device 25 is composed of an auger or the like, and discharges the grains stored in the grain tank 24 to any place. Further, the reservoir unit 6 includes a reservoir detection unit 26 that detects a storage amount of grains stored in the grain tank 24 (see FIG. 2).

The discharged straw processing unit 7 is provided behind the threshing unit 4. The discharged straw processing unit 7 includes a discharged straw transport device (not illustrated), and a discharged straw cutting device (not illustrated). The discharged straw transport device transports the discharged straw transported from the feed chain 18 of the threshing unit 4 to the discharged straw cutting device. The discharged straw cutting device cuts the discharged straw transported by the discharged straw transport device, and discharges the cut discharged straw to the outside of the combine.

The power unit 8 is provided above the travel unit 2 and in front of the reservoir unit 6. The power unit 8 includes the engine 27 that generates rotational power. The power unit 8 transmits the rotational power generated by the engine 27 to the travel unit 2, the reaping unit 3, the threshing unit 4, the sorting unit 5, the reservoir unit 6, and the discharged straw processing unit 7.

The steering unit 9 is provided above the power unit 8. The steering unit 9 includes a steering wheel for instructing turning of a machine body of the combine 1, a main shift lever and a sub transmission lever for instructing change of the forward and backward traveling speed of the combine 1 as an operation tool for steering the travel of the combine 1, around a driver's seat which is a seat on which a worker sits. The manual travel of the combine 1 is executed by the travel unit 2 that receives the operation of the steering wheel of the steering unit 9, the main shift lever, and the sub transmission lever. The steering unit 9 includes a mechanism for operating the reaping work by the reaping unit 3, the threshing work by the threshing unit 4, the discharge work by the discharge device 25 of the reservoir unit 6, and other work.

The combine 1 includes a positioning unit 28 that acquires position information of the combine 1 by using a satellite positioning system such as a GPS. The positioning unit 28 receives a positioning signal from a positioning satellite through a positioning antenna, and acquires position information of the positioning unit 28, that is, position information of the combine 1 on the basis of the positioning signal.

Now, a control device 30 of the combine 1 will be described with reference to FIG. 2. The control device 30 is composed of a computer such as a CPU, and is connected to a communication unit 32 that communicates with a storage unit 31 such as a ROM, a RAM, a hard disk, and a flash memory, and an external device.

The storage unit 31 stores a program and data for controlling various types of constituent components and various types of functions of the combine 1, and the control device 30 executes an arithmetic process on the basis of the program and the data stored in the storage unit 31, so that the various typed of constituent components and the various types of functions are controlled. The control device 30 acquires the position information of the combine 1 from the positioning unit 28, for example.

The communication unit 32 is capable of wirelessly communicating with an external device such as a mobile terminal 40 owned by the worker via a wireless communication antenna. The control device 30 controls the communication unit 32 to perform wireless communication with the mobile terminal 40, and transmits and receives various types of information to and from the mobile terminal 40.

The control device 30 operates as the travel control unit 35 by executing the program stored in the storage unit 31. The travel control unit 35 implements an automatic travel step of an automatic travel method according to the present invention.

The travel control unit 35 controls the automatic travel of the combine 1 in a case where an automatic travel mode is set. For example, the travel control unit 35 acquires a work route set for the field or a field parameter from the mobile terminal 40. When the automatic reaping travel is started, the travel control unit 35 acquires the position information of the combine 1 from the positioning unit 28, and controls the power unit 8, the travel unit 2, and the reaping unit 3 such that the combine 1 performs the automatic reaping travel along the work route on the basis of the position information, the work route, and the field parameter.

The mobile terminal 40 is one of the constituent components of the combine 1, is a terminal that can remotely control the combine 1, and is composed of, for example, a tablet terminal equipped with a touch panel, a laptop personal computer, or the like. An operation device similar to the mobile terminal 40 may be provided in the steering unit 9. In the present invention, the automatic travel system is constituted by the combine 1 and the mobile terminal 40.

As illustrated in FIG. 2, the mobile terminal 40 includes a control device 41 composed of a computer such as a CPU, and the control device 41 is connected to a storage unit 42 such as a ROM, a RAM, a hard disk drive and a flash memory, and a communication unit 43 that communicates with an external device.. Further, the mobile terminal 40 includes a display unit 44, such as a touch panel and a monitor for displaying various information and outputting the various information to the worker, and an input unit 45 such as a touch panel and an operation key for receiving an inputting operation of various information from the worker.

The storage unit 42 stores a program and data for controlling various constituent components and various functions of the mobile terminal 40, and the control device 41 executes an arithmetic process on the basis of the program and the data stored in the storage unit 42, so that the various constituent components and the various functions of the mobile terminal 40 are controlled. The storage unit 42 stores field information of a field which is an object to be worked by the combine 1. The examples of the field information include the shape, the size, and the position information (coordinates and the like) of a field edge constituting an outer circumference of the field, the shape, the size, and the position information (coordinates and the like) of the working region of the field, and a discharge position adjacent to the collection part in the field.

The storage unit 42 stores various field parameters for each field for which field information is registered and which are used for automatic travel, as well as a general parameter that is independent of the field as an initial value for each field parameter.

Each field parameter includes an internal parameter that is referenced by automatic travel in the field. The internal parameter is a parameter used only in a program by the control device 41, includes a parameter used to calculate the reaping possible distance [m] of the combine 1 in a corresponding field, includes, for example, a unit yield [kg/m2] indicating a yield of grains harvested per unit area in the corresponding field, or includes a parameter used to calculate a unit yield, for example, an accumulated yield [kg] and a harvest area [m2] obtained during past reaping travel in the corresponding field.

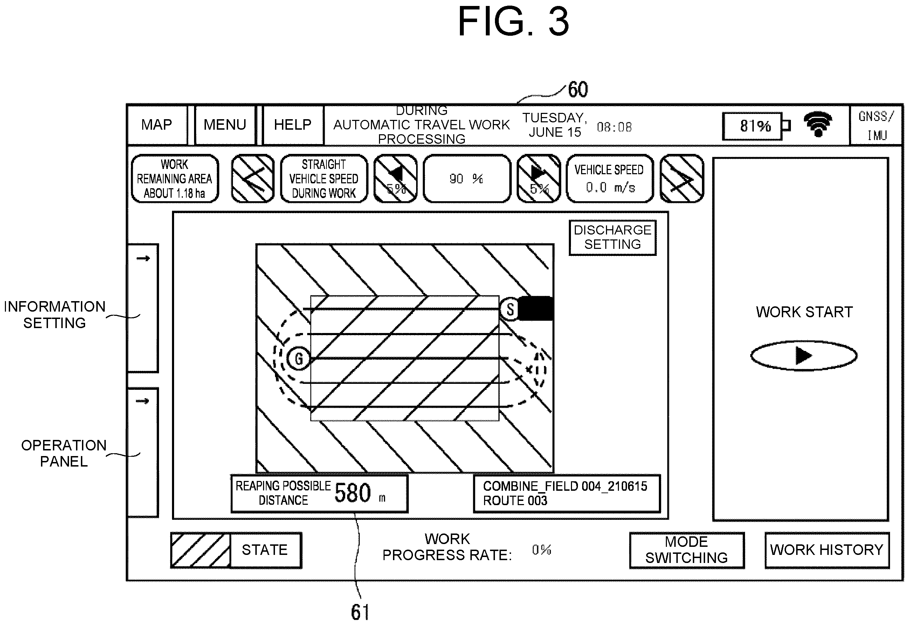

The reaping possible distance is, for example, displayed in a reaping possible distance field 61 on a work screen 60 (see FIG. 3) displayed on the display unit 44 while the automatic reaping travel is being executed, is presented to the worker for reference. The reaping possible distance is calculated by reaping possible yield of the combine 1 [kg] ÷ (unit yield × reaping width [m]), and the unit yield is calculated by accumulated yield ÷ harvest area. The reaping possible yield is the maximum storage capacity of the grain tank 24 of the reservoir unit 6. The accumulated yield is the storage amount of grains stored in the grain tank 24 during one work in which reaping travel is performed in the corresponding field in the past (e.g., in previous work), and can be the storage amount detected by the reservoir detection unit 26. Herein, the one work is defined as a period from the start of reaping travel in a state in which the grain tank 24 is empty to the transition to the discharge work. The harvest area is the area of the reaping travel trajectory (previously reaped region) obtained by traveling while reaping in one work in one past (e.g., previous work) reaping travel in the corresponding field.

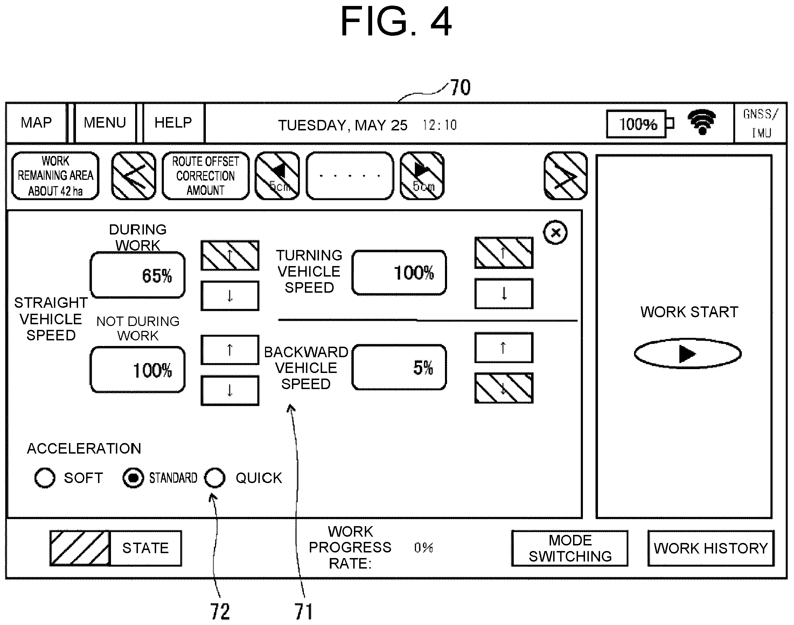

The field parameter includes a setting parameter specific to the field that can be set and operated by the worker during automatic travel in the field. The setting parameter includes, for example, travel information and work information referenced during automatic travel. Specifically, the setting parameter includes travel information regarding the forward traveling speed, the backward traveling speed, and the turning speed during automatic travel, and includes, for example, the set vehicle speed, which is a percentage within the range of 0 to 100% of the speed setting value according to the position of the main gearshift lever, for each of forward traveling, backward traveling, and turning, and includes the acceleration that is selected as any one of the stages such as soft, standard, and quick. The travel information is, for example, displayed in a set vehicle speed setting field 71 or an acceleration setting field 72 on a travel information setting screen 70 (see FIG. 4) displayed on the display unit 44 while the automatic reaping travel is being executed, and is presented to the worker in a setting operable manner.

The communication unit 43 is communicatively connected to the communication unit 32 of the combine 1 via a wireless communication antenna. The control device 41 controls the communication unit 43 to perform wireless communication with the combine 1 and transmit and receive various information to and from the combine 1.

The control device 41 of the mobile terminal 40 operates as a field selection unit 50, a parameter setting unit 51, a work route creation unit 52, an information setting unit 53, and a parameter saving unit 54 by executing the program stored in the storage unit 42. The field selection unit 50, the parameter setting unit 51, the work route creation unit 52, the information setting unit 53, and the parameter saving unit 54 realize a field selection step, a setting step, a work route creation step, an information setting step, and a parameter saving step of the automatic travel method according to the present invention.

The field selection unit 50 manually or automatically selects the field which is an object to be worked by the automatic travel. For example, the field selection unit 50 displays, on the display unit 44, a field selection screen (not illustrated) for selectively displaying a field corresponding to the field information stored in the storage unit 42. When any field is selected on the field selection screen in response to manual operation, the field selection unit 50 selects the selected field as the object to be worked and reads the field information from the storage unit 42. The field selection unit 50 may receive, from the combine 1, the position information of the combine 1 positioned by the positioning unit 28 of the combine 1, and may be able to select a field corresponding to the field information including the current position of the combine 1 within a range, among the field information stored in the storage unit 42, or may automatically select the field.

The field selection unit 50 selects a new field at the current position of the combine 1 as the object to be worked in a case where the creation of the new field is operated on the field selection screen or in a case where the field information including the current position of the combine 1 within the range is not stored in the storage unit 42. The field selection unit 50 creates field information of the new field by receiving, from the combine 1, the position information of the combine 1 positioned by the positioning unit 28 of the combine 1 and recording the position information of the outer circumference or the position information of the route of reaping travel when the combine 1 performs reaping travel while circling along the outer circumference of the new field. Then, the field selection unit 50 stores the created field information in the storage unit 42.

When the parameter setting unit 51 detects the movement of the combine 1 to one field where automatic travel is to be performed, in order to perform automatic travel, the parameter setting unit 51 changes the parameter that is referenced by the control device 30 of the combine 1 and the control device 41 of the mobile terminal 40, and sets the field parameter that is stored in advance corresponding to the one field.

When the parameter setting unit 51 detects the movement of the combine 1 to one field, the parameter setting unit 51 may display, on the display unit 44, a notification screen (not illustrated) (not illustrated) for notifying the worker that the field parameter is changed, or may display, on the display unit 44, a confirmation screen (not illustrated) for confirming the worker whether or not the field parameter is changed.

For example, in a case where the combine 1 moves to one field, the parameter setting unit 51 detects the movement of the combine 1 to the one field in accordance with selection of the one field by the field selection unit 50, the parameter setting unit 51 reads a field parameter corresponding to the one field from the storage unit 42, and sets this field parameter to perform automatic travel in the one field.

In a case where the combine 1 moves to one field from the other field, when the combine 1 was located in the other field, the field selection unit 50 selects the other field and the parameter setting unit 51 would have set a field parameter corresponding to the other field. Thereafter, when the combine 1 moves to the one field, the field selection unit 50 selects the one field, and therefore the parameter setting unit 51 detects the movement of the combine 1 to the one field in accordance with the selection of the one field by the field selection unit 50, the parameter setting unit 51 reads the field parameter corresponding to the one field from the storage unit 42, and changes the parameter referenced for automatic travel from the field parameter of the other field to the field parameter of the one field to set the field parameter of the one field.

On the other hand, in a case where the field parameter corresponding to the one field is not stored in the storage unit 42 when the combine 1 moves to the one field, the parameter setting unit 51 reads an initial value of the field parameter from the storage unit 42 and sets the initial value, regardless of whether or not the field information including the current position of the combine 1 within the range is stored in the storage unit 42.

Alternatively, in a case where the field parameter corresponding to one field is stored in the storage unit 42 when the combine 1 moves to the one field, the parameter setting unit 51 may display, on the display unit 44, a selection screen (not illustrated) for allowing the worker to select whether to set the field parameter corresponding to the one field or to set the initial value of the field parameter.

The parameter setting unit 51 sets, for example, the parameter to be used to calculate the reaping possible distance of the combine 1 in the field as the field parameters, and sets, for example, the unit yield of the combine 1 or a past accumulated yield and a past harvest area. The parameter setting unit 51 also sets speed information related to the forward traveling speed, the backward traveling speed, and the turning speed during automatic travel as the field parameters, and sets, for example, the set vehicle speeds in forward traveling, backward traveling, and turning and the degree of acceleration.

The parameter setting unit 51 changes (updates) the unit yield or the past accumulated yield and the past harvest area as parameters to be used to calculate the reaping possible distance, each time the combine 1 discharges the grains stored in the reservoir unit 6. For example, the parameter setting unit 51 changes, the accumulated yield, the storage amount in the grain tank 24 when the grain tank 24 of the reservoir unit 6 becomes full due to the reaping travel in the field by the combine 1, and changes, as the harvest area, the area of the reaping travel trajectory in which the reaping travel is performed from the empty state to the full state of the grain tank 24.

The parameter setting unit 51 may calculate a new unit yield on the basis of the thus changed accumulated yield and harvest area, and correct the previously set unit yield by the newly calculated unit yield, so that the unit yield may be changed, for example, the unit yield may be averaged. In a new field where the entire region is unreaped, the parameter setting unit 51 initially sets an initial field parameter, and therefore when the grain tank 24 is full and the discharge work is performed, the initial field parameter is corrected.

As a specific example, when the combine 1 first performs a reaping travel while circling along the outer circumference of a field where the entire region is unreaped, the combine 1 may perform discharge operation at the completion of such outer circumference reaping work, and the parameter setting unit 51 may set, as the accumulated yield, the storage amount of grains in the grain tank 24 harvested in such an outer circumference reaping travel, and may set, as the harvest area, the area of the reaping travel trajectory due to the outer circumference reaping travel.

In a case where there is more than a predetermined deviation between the field parameter corresponding to one field set at the time of movement to the one field and the field parameter set in accordance with the automatic reaping travel in the one field, the parameter setting unit 51 may perform change to the field parameter set in accordance with the automatic reaping travel. For example, in a case where a difference between a unit yield (first unit yield) set on the basis of the field parameter corresponding to one field at the time of movement to the one field, and a unit yield (second unit yield) calculated at the time of discharge work of grains harvested in the automatic reaping travel in the one field and stored in the grain tank 24 is a predetermined difference threshold value or more, the second unit yield may be set regardless of the first unit yield.

The work route creation unit 52 creates a work route for automatic reaping travel in the field selected by the field selection unit 50, stores the work route in the storage unit 42, and transmits the work route to the combine 1 via the communication unit 32. The work route includes travel information related to automatic travel and work information related to work such as automatic reaping. The travel information includes the travel position in the field as well as the direction of travel and the set vehicle speed at each travel position. The work information includes information related to the work such as reaping operation or stop, the reaping speed and the reaping height at each travel position. The work route creation unit 52 creates a straight line of routes for reaping while traveling in the field in the forward direction in accordance with a traveling pattern (reciprocating reaping or reaping while circulating) selected by the operation of the mobile terminal 40, and creates the work route by combining a plurality of the routes.

The information setting unit 53 sets the travel information and the work information to be referenced during automatic traveling in accordance with the setting operation by the worker. The information setting unit 53, for example, displays, on the display unit 44, the travel information setting screen 70 on which travel information can be set and operated during automatic travel. The travel information setting screen 70 enables setting operation of the forward traveling set vehicle speed (straight advancing vehicle speed), the backward traveling set vehicle speed (backward vehicle speed), and the turning set vehicle speed (turning vehicle speed), as the set vehicle speeds, each of which is a percentage within the range of 0 to 100% of the speed setting value according to the position of the main gearshift lever, in the set vehicle speed setting field 71. In addition, the travel information setting screen 70 enables selecting operation of any stage of soft, standard, and quick as the stage of acceleration in the acceleration setting field 72.

The parameter saving unit 54 associates the field parameter set when the automatic travel in the field is completed with the field, and stores and save the associated field parameter in the storage unit 42. For example, in a case where the automatic reaping travel of the work route set for the field is completed, or in a case where the position information of the combine 1 positioned by the positioning unit 28 of the combine 1 is received from the combine 1, and it is detected that the combine 1 leaves the field on the basis of the position information of the combine 1 and the field information of the field, the parameter saving unit 54 may determine the end of automatic travel.

When the parameter saving unit 54 determines the end of automatic travel, the worker may be able to select whether or not the set field parameter is to be saved. The parameter saving unit 54 may display, on the display unit 44, for example, the selection screen (not illustrated) enabling selection as to whether or not the field parameter is saved, or may enable the worker to set a selection flag for determining in advance whether or not the field parameter is saved.

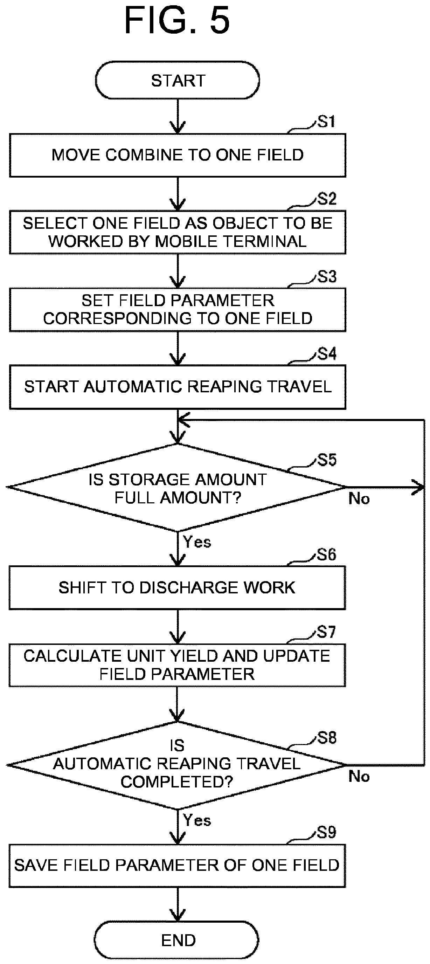

Now, an example of operation for setting field parameters in the combine 1 will be described with reference to a flowchart in FIG. 5.

First, the mobile terminal 40 receives the position information of the combine 1 positioned by the positioning unit 28 of combine 1 from the combine 1, and grasps the current position of the combine 1. The field selection unit 50 of the mobile terminal 40 enables selecting operation of the field corresponding to the field information that includes the current position of the combine 1 within the range, and when the combine 1 moves to one field in response to manual operation (Step S1), the field selection unit 50 enables selecting operation of the one field.

When the one field is selected by the field selection unit 50 and the one field is set as the object to be worked for the automatic travel (Step S2), the parameter setting unit 51 of the mobile terminal 40 detects the movement to the one field and reads the field parameter corresponding to the one field from the storage unit 42 and sets this field parameter (Step S3).

When the combine 1 starts automatic reaping travel in the one field (Step S4) and the storage amount in the grain tank 24 of the reservoir unit 6 is full (Yes in Step S5), the combine 1 shifts to discharge work (Step S6). At this time, the parameter setting unit 51 calculates a unit yield on the basis of the accumulated yield, which is the storage amount in the grain tank 24, and the harvest area of the reaping travel trajectory of the combine 1 until the full state in the grain tank, and updates the field parameter (Step S7).

In a case where the combine 1 has not completed the automatic reaping travel in the one field (No in Step S8), the above operation is repeated. On the other hand, in a case where the combine 1 completes the automatic reaping travel in the one field (Yes in Step S8), when the combine 1 leaves the one field, the parameter saving unit 54 associates the field parameter set for the combine 1 at the time of the completion of the automatic reaping travel with the one field, and stores and saves the associated field parameter in the storage unit 42 (Step S9).

As described above, according to this embodiment, the combine 1 includes the control device 30 and the mobile terminal 40. The mobile terminal 40 includes the control device 41, and when the control device 41 detects movement to the one field where automatic travel is to be performed, the control device 41 functions as the parameter setting unit 51 that sets the field parameter corresponding to the one field. The control device 30 functions as the travel control unit 35 that executes the automatic travel of the combine 1 on the basis of the work route and the field parameter set for the one field.

Consequently, the combine 1 can executes automatic travel suitable for the field by simply setting a field parameter suitable for the field, without imposing any burden on the worker.

According to this embodiment, when the parameter setting unit 51 detects movement from the other field to the one field, the parameter setting unit 51 changes the field parameter set in the other field.

Consequently, the combine 1 can prevent the use of the field parameter corresponding to the other field, in the automatic travel in the one field.

According to this embodiment, when the parameter setting unit 51 detects movement from the other field to the one field, the parameter setting unit 51 sets the field parameter corresponding to the one field instead of the field parameter set for the other field.

Consequently, the combine 1 can prevent the use of field parameter corresponding to the other field in the automatic travel in the one field, and can perform suitable automatic travel by using the field parameter corresponding to the one field, for example, a field parameter in the past (e.g., from previous work).

According to this embodiment, the parameter setting unit 51 sets an initial value stored in advance, in a case where the field parameter corresponding to the one field is not stored.

Consequently, even in a case where the combine 1 performs automatic travel in a field where no field parameter is stored, the combine 1 sets, as the field parameter, the general initial value that does not depend on the field, and therefore it is possible to prevent automatic travel that depends on other field.

According to this embodiment, the parameter setting unit 51 sets a unit yield as the field parameter.

Consequently, the combine 1 can properly calculate the reaping possible distance on the basis of the unit yield while performing automatic reaping travel in the field, and the worker can determine the timing of shifting to the discharge work while checking the reaping possible distance. In addition, the combine 1 can set an interruption position for shifting to the discharge work in the work route to an appropriate position such as an edge of an unreaped region, by calculating backward from the reaping possible distance, and an automatic travel route including an automatic discharge route can be set with high accuracy.

According to this embodiment, the parameter setting unit 51 sets the second unit yield in a case where a difference between the first unit yield set at the time of movement to the one field and the second unit yield based on the yield acquired in the automatic reaping travel in the one field is the predetermined difference threshold value or more.

Consequently, in a case where there is the predetermined deviation or more between the field parameter corresponding to the one field set at the time of movement to the one field and the field parameter set in accordance with the automatic reaping travel in the one field, the combine 1 can set a field parameter more compatible with a current state of the field, for example, a unit yield calculated on the basis of an actual yield. Therefore, the reaping possible distance can be more suitably calculated on the basis of the unit yield, the interruption position for shifting to the discharge work can be more suitably set by calculating backward from the reaping possible distance, and the automatic travel route including the automatic discharge route can be set with high accuracy.

According to this embodiment, the parameter setting unit 51 sets travel information related to automatic travel as the field parameter.

Consequently, the combine 1 can set the forward traveling speed, the backward traveling speed, and the turning speed during automatic travel, and the acceleration during the automatic travel in accordance with the field.

In other embodiments of the combine 1, the parameter setting unit 51 may set a parameter related to automatic straight advancing travel, which is automatic straight advancing according to a predetermined reference line, as a field parameter.

For example, before starting automatic straight advancing travel, the combine 1 sets a point A (start point) and a point B (end point) while traveling manually in a field, and sets a straight line connecting the point A and the point B as a reference line. The combine 1 sets a work route parallel to the reference line to an unreaped region of a field, and performs automatic straight advancing while reaping along the work route. The combine 1 repeats the automatic straight advancing by sequentially setting the work routes at intervals of the reaping width. When the reference line is set in this manner, the parameter setting unit 51 sets the reference line or the points A and B as field parameters.

Alternatively, the combine 1 may set each of sides that make up the outer circumference of the field as a reference line. The combine 1 performs automatic straight advancing along the work route parallel to each reference line that makes up the outer circumference of the field, so that combine 1 performs outer circumference reaping travel. Also in this case, when the reference line is set, the parameter setting unit 51 sets the reference line or each side constituting the outer circumference of the field as the field parameter.

Consequently, the combine 1 sets a parameter related to the automatic straight advancing travel as the field parameter, so that in a case where automatic straight advancing is performed in the field, it is possible to prevent automatic straight advancing using a field parameter related to the automatic straight advancing travel such as a reference line set in other field.

In the above embodiment, the parameter saving unit 54 stores the field parameter set at the end of the automatic travel in the storage unit 42 by associating the field parameter with the field, and when the parameter setting unit 51 detects the movement of the combine 1 to one field, the parameter setting unit 51 reads the field parameter corresponding to the one field from the storage unit 42 and sets this field parameter, but the present invention is not limited to this. For example, in other example, the parameter saving unit 54 may transmit and save the field parameter to an external device such as a server, and the parameter setting unit 51 may receive the field parameter from the external device such as a sever set.

In other embodiments of combine 1, the parameter saving unit 54 saves the field parameter of each field of the previous year in the storage unit 42 or an external device such as a server, and the parameter setting unit 51 may read and set the previous year's field parameters from storage unit 42 or an external device such as a server. At this time, the parameter saving unit 54 may save the previous year's climate and the degree of grain fall in the field in the storage unit 42 or the external device such as a server, and the parameter setting unit 51 may set the initial values of the field parameters without adopting the previous year's field parameters in a case where the climate or degree of grain fall-off deviates significantly between this year and the previous year.

In the above embodiment, the example of the combine 1 composed of the head-feeding type combine is described. However, the present invention is not limited to this example, and the combine 1 may be composed of an ordinary-type combine.

In the above embodiment, the example in which the work vehicle is composed of the combine 1 is described. However, the present invention is not limited to this example. For example, the work vehicle of the resent invention may be composed of other agricultural work machine such as a tractor and a rice transplanter, or may be composed of a work vehicle other than the agricultural work machine.

For example, in a case where the work vehicle is composed of a rice transplanter, planting information such as varieties of agricultural products to be planted may be set as the field parameter.

The present invention can be modified as appropriate to the extent that it does not contradict the gist or idea of the invention that can be read from the claims and the specification as a whole, and the automatic travel method, the work vehicle and the automatic travel method with such modifications are also included in the technical concept of the invention.

### REFERENCE SIGNS LIST

1 combine (work vehicle)
2 travel unit
3 reaping unit
6 reservoir unit
24 grain tank
26 reservoir detection unit
30 control device
35 travel control unit
40 mobile terminal
41 control device
42 storage unit
44 display unit
50 field selection unit
51 parameter setting unit
52 work route creation unit
53 information setting unit
54 parameter saving unit

## Claims

1. An automatic travel method for causing a work vehicle to perform automatic travel in a field, the automatic travel method comprising:
a setting step of setting a parameter corresponding to one field, when movement to the one field where automatic travel is to be performed is detected; and
an automatic travel step of executing the automatic travel of the work vehicle on the basis of a work route set for the one field, and the parameter.

2. The automatic travel method according to claim 1, wherein
in the setting step, when movement from another field to the one field is detected, a parameter set for the other field is changed.

3. The automatic travel method according to claim 1 or 2, wherein
in the setting step, when movement from another field to the one field is detected, the parameter corresponding to the one field is set in place of a parameter set for the other field.

4. The automatic travel method according to claim 1 or 2, wherein
in the setting step, in a case where the parameter corresponding to the one field is not stored, an initial value stored in advance is set.

5. The automatic travel method according to any one of claims 1 to 4, wherein
the work vehicle is a combine, and
in the setting step, a unit yield is set as the parameter.

6. The automatic travel method according to claim 5, wherein
in the setting step, in a case where a difference between a first unit yield set when moving to the one field, and a second unit yield based on a yield acquired during automatic reaping travel in the one field is a predetermined difference threshold value or more, the second unit yield is set.

7. The automatic travel method according to any one of claims 1 to 6, wherein
in the setting step, travel information related to automatic travel is set as the parameter.

8. The automatic travel method according to any one of claims 1 to 7, wherein
in the setting step, a reference line that serves as a reference of automatic straight advancing is set as the parameter.

9. A work vehicle that performs automatic travel in a field, the work vehicle comprising:
a parameter setting unit that sets a parameter which corresponds to one field and is stored in advance, when movement to the one field where automatic travel is to be performed is detected; and
a travel control unit that executes automatic travel of the work vehicle on the basis of a work route set for the one field and the parameter.

10. An automatic travel system that causes a work vehicle to perform automatic travel in a field, the automatic travel system comprising:
a parameter setting unit that sets a parameter which corresponds to one field and is stored in advance, when movement to the one field where automatic travel is to be performed is detected; and
a travel control unit that executes automatic travel of the work vehicle on the basis of a work route set for the one field and the parameter.
